# EUROPEAN PATENT SPECIFICATION

(11) **EP 0 454 258 B1**
(45) Date of publication and mention of the grant of the patent: **29.12.1993**
(21) Application number: 91200974.3
(22) Date of filing: 23.04.1991
(51) Int. Cl.: E01C 11/22

(54) **Edge section or edge frame**
Kantenprofilabschnitt oder Zarge
Arête à section ou châssis

(30) Priority: 23.04.1990 NL 9000963
(43) Date of publication of application: 30.10.1991
(73) Proprietor: TBS Soest b.v., NL-3762 EC Soest (NL)
(72) Inventor: Raatjes, Egbertus Sybolt, NL-3768 ML Soest (NL)
(74) Representative: Kooy, Leendert Willem

(56) References cited:
- EP-A- 0 081 762
- EP-A- 0 204 278
- DE-A- 2 844 748

## Description

The invention relates to a metal edge section or edge frame of the type described in the preamble of claim 1.

Such a metal edge section or edge frame is known from EP-A-0 081 762.

It is known to provide gutters or drains in e.g. surfaced roads, pavements, foothpaths, industrial floors and the like for the purpose of collecting and discharging rain or waste water and for installing cables, conduits and the like which have to be permanently accessible, which gutters or drains are then covered with removable lids or grids that can optionally be locked.

In the situations referred to above the gutter or drain body is devised both in cement-bound and polyster-bound concrete, and they can be provided with a - usually metal - edge profile in order to prevent mechanical damage to both the area on and between which the lids/grids are supported and the top surfaces of the walls, which damage is to be expected due to the traffic moving over them; this is known from e.g. DE-OS-1,708,669, EP-0,204,278, page 7, line 31 ff., and DE-OS-2,844,748.

In this respect it is important, that such edge sections are immovably connected to the gutter or drain body and are integrated therewith, which can optimally be achieved by including the edge section in the casting mould in which the gutter or drain body is produced, prior to filling the casting mould.

Although in a polyster-concrete embodiment the polyester provides excellent adherence to a metal edge section, it has appeared that in order to provide a lasting immovable connection between edge section and gutter/drain body, the edge sections should also be anchored therein.

A solution to this effect is disclosed in DE-OS-1,708,669 and EP-0,204,278, both referred to above, showing anchors attached to the edge section.

A different type of anchorage is disclosed in DE-GM-7,122,579, showing an edge section of which the side facing towards the gutter body is provided with anchoring elements which engage in the gutter body.

Yet another type of anchorage is shown in EP-81762, disclosing an edge section comprising flange members facing towards the gutter body and having apertures.

This type of edge sections is attached or wedged into the casting mould prior to filling it, so as to integrate these edge sections into the gutter body during manufacture.

Employing edge sections in this way makes relatively high demands of the accuracy of the surfaces which are to contact the casting mould during the manufacture of the gutter body in order to achieve a good fit of edge section and gutter body, both on the outside and on the inside of the gutter.

Apart from that, the embodiment of the anchorage type of the above-mentioned DE-GM-7,122,579 is rather costly from a production-technical point of view, and the anchorage as shown in EP-81762 is only effected in the outer regions of the wall of the gutter/drain body.

The invention aims to provide an edge section or edge frame for the application as expounded in the foregoing, having been given such a form - in a simple manner, such as e.g. by casting (preferably in cast iron) - that an optimum anchorage is achieved without the need to provide anchors, and that the above-outlined problems are removed by means of a design that differs from any design known thus far, a different positioning of the anchoring elements and a related considerable reduction of the contact surface between edge section and casting mould.

This aim has been achieved by means of the measures described in the claims.

The invention will be further elucidated hereinafter on the basis of the drawing, in which by means of example, a number of embodiments of an edge section according to the invention have been shown. In the drawing:
figure 1 shows a top view of an edge section according to the invention;
figure 2 shows an inner view along the line II-II in figure 1, but provided with a locking housing;
figure 3 shows an outer view along the line III-III in figure 2, but also provided with a locking housing;
figure 4 shows a head view along the line IV-IV in figure 2, without locking housing;
figures 5 and 6 show sections along the lines V-V and VI-VI in figure 2, without locking housing;
figure 7 shows a section along the line VII-VII in figure 2;
figure 8 shows a section along the line VIII-VIII in figure 2, without locking housing,
figure 9 shows a partial view of an edge section as shown in figure 3, having anchoring elements of a second embodiment,
figure 10 shows a section along the line X-X in figure 9,
figure 11 shows a partial view of an edge section as shown in figure 3, having anchoring elements of a third embodiment, and
figure 12 shows a section along the line XII-XII in figure 11.

In the figures, the top surfaces - indicated by 2 - of a metal - e.g. cast iron - edge section 1 according to the invention are usually on a level or substantially on a level with the top surface of a lid/grid (not shown) that is to be supported by this edge section and with the plane of the (also not shown) surrounding floor or surfaced area.

The bearing surface indicated by 3 extends parallel or at least substantially parallel to the top plane 2 in order to support the lid/grid, for which purpose it co-operates with the support surfaces on the lid/grid.

A vertical or at least substantially vertical confining plane 4 connects the top plane 2 to the bearing surface 3 and serves to laterally confine the lids/grids placed over a gutter or drain between two parallel edge sections being at a specific distance from one another, said confining planes co-operating with the side planes on these lids/grids. Near the edge ends the bearing surface 3 can widen, thus creating a staggered, vertical confining plane 4' to lock the lids/grids against shifting. This is not essential to the invention, however.

A bottom flange plane 2a pertains to the top plane 2, a bottom plane 3a pertains to the bearing surface 3 and an outer plane 4a pertains to the confining plane 4.

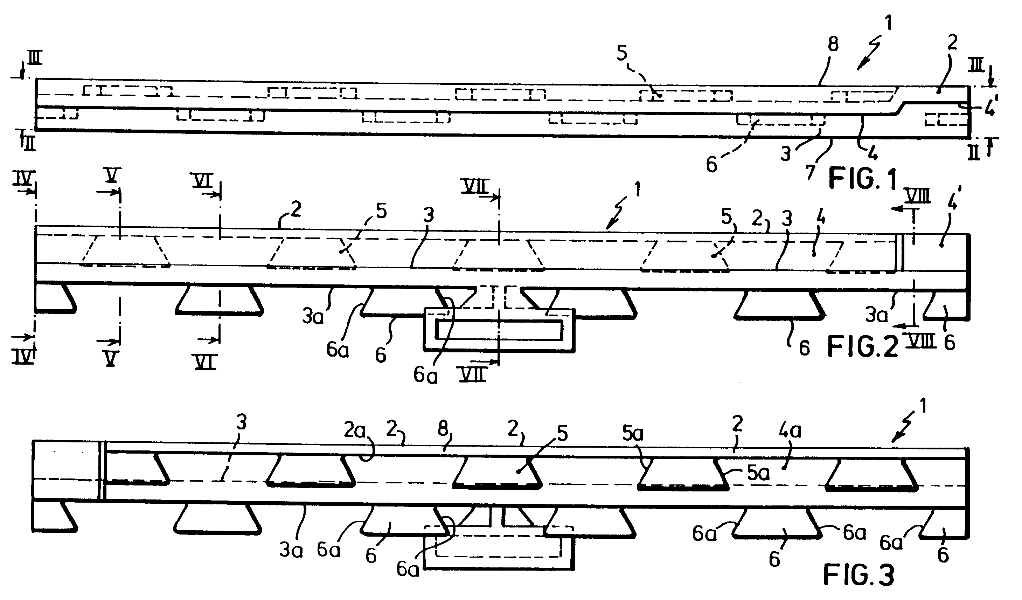

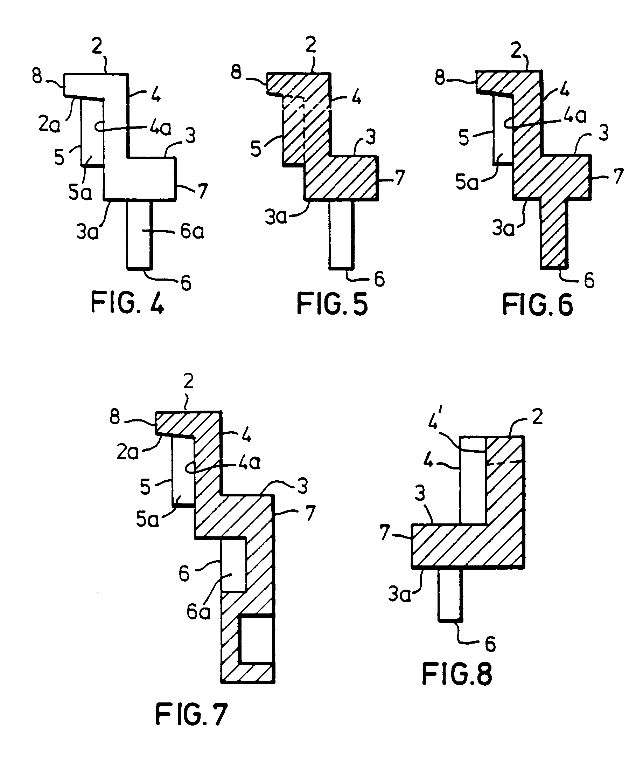

As appears from figures 1-8, at the planes 2a, 4a and 3a the edge sections have one or more, more or less dovetail-shaped or trapezoidal cast-on protrusions 5 or 6, respectively, in such a manner that their inclined planes 5a or 5b, respectively, include an angle with the above-mentioned planes 2a and 3a smaller than 90°, so that these protrusios function as anchoring elements.

Figures 2, 3 and 7 show a locking housing that is not relevant to the essence of the invention and that therefore has not been provided with a reference numeral.

It will be clear, that for obtaining the aimed anchoring effect during integration of the edge sections in the gutter/drain body, the angle of the said planes 5a and 6a to the plane 2a or 3a, respectively, is relevant, and is preferably approx. 60°.

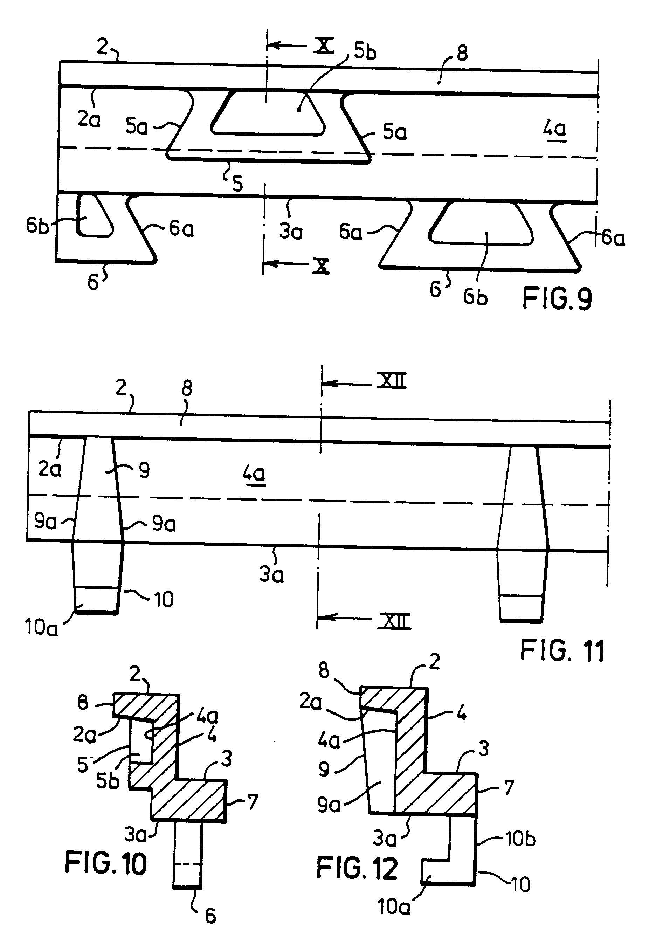

In the second embodiment shown in figures 9 and 10, the anchoring elements 5 and 6 also comprise a recess 5b or an opening 6b, respectively. Figures 11 and 12 show a third embodiment of the anchoring elements. These consist in ribs 9 formed on plane 4a and extending downwards from plane 2a, said ribs being placed so that their inclined planes 9a form an angle with plane 2a that is slightly less than 90°, e.g. approx. 80°, and in anchor legs 10, directed downwards with respect to plane 3a, having a substantially quadrangular, rectangular or trapezoidal section, and being provided with a protrusion 10a formed near their leg ends, wherein the plane 10b of said legs is either flush with plane 7, or recedes with respect thereto.

When fixing the edge sections according to the invention in the casting mould, the contact between casting mould and edge section remains restricted to only the planes indicated in the figures at 7 and 8. In a special embodiment, the said planes 7 and 8 are at a smaller angle with respect to plane 3 or plane 2, respectively, in such a manner that the angle formed between the planes 3 and 7 and the planes 2 and 8 is smaller than 90°, thus reducing the contact surface between the edge section and the casting mould.

All this implies such an increase of the admissible tolerances regarding the straightness and surface accuracy of the - unprocessed - edge sections in those places where these sections are supposed to abut during the manufacturing process in the casting mould for preventing leakage of casting material during the manufacture of the gutter/drain body, that a finishing process is no longer required.

## Claims

1. Metal edge section or edge frame (1) adapted to be anchored into a gutter or drain body for protection of the edges of said gutter or drain body and for supporting lids or grids which are placed over drain gutters or drains, comprising a planar bearing surface (3) to support said lids or grids, further comprising a web extending substantially vertically from said bearing surface and having an inner plane (4) to confine laterally said lids or grids, **characterized in that** the anchorage comprises trapezoidal cast-on protrusions (5) or ribs (9) formed on the bottom plane (2a) of a first flange, said flange extending outwardly from said web, the edge section (1) thereby constituting a z-shaped cross section, and said protrusions (5) or ribs (9) are connected also to the outer plane (4a) of said web, said protrusions (5) or ribs (9) having inclined planes (5a, 9a) positioned at an acute angle to said first flange bottom plane (2a) with respect to the longitudinal extension of said edge section (1).

2. Edge section or edge frame according to claim 1, **characterized in that** it comprises a number of trapezoidal anchoring elements (6) formed on the bottom plane (3a) of the second flange of said Z-shaped cross-section, said anchoring elements having inclined planes (6a) positioned at an acute angle to the bottom plane (3a).

3. Edge section or edge frame according to claim 1, **characterized in that** recesses (5b) are formed in the cast-on protrusions (5).

4. Edge section or edge frame according to claim 2, **characterized in that** apertures (6b) are formed in the anchoring elements (6).

5. Edge section or edge frame according to claim 1, **characterized by** a number of anchor legs (10) extending downwards from the bottom plane (3a) of the second flange of said Z-shaped cross-section and having a substantially quadrangular, rectangular, or trapezoidal cross-section, said anchor legs having protrusions (10a) near their ends.

6. Edge section or edge frame according to claim 5, **characterized in that** said anchor legs (10) have an inner plane (10b) which either is an extension of the inner boundary plane (7) connecting the bearing surface (3) to the bottom plane (3a) of the second flange of said Z-shaped cross-section, or recedes with respect thereto.

7. Edge section or edge frame according to any one of the preceding claims, **characterized by** an outer boundary plane (8) connecting the upper plane (2) to the bottom plane (2a) of said first flange of said Z-shaped cross-section, said outer boundary plane (8) including an angle of just under 90°, such as approx. 80°, with said upper plane (2) of said first flange.

8. Edge section or edge frame according to any one of the preceding claims 2-7, **characterized by** an inner boundary plane (7) connecting the bearing surface (3) to the pertaining bottom plane (3a) of the second flange of said Z-shaped cross-section, said inner boundary plane (7) including an angle of just under 90°, such as approx. 80°, with said bearing surface (3).

9. Edge section or edge frame according to any of the preceding claims, **characterized by** an outer boundary plane (8) connecting the upper plane (2) to the bottom flange plane (2a) of said first flange of said Z-shaped cross-section, said cast-on protrusion (5, 9) having an outer boundary plane arranged in a recessed position or an inwardly downwardly inclined position with respect to said outer boundary plane (8) of said first flange (2, 2a).

## Patentansprüche

1. Randprofil oder Randleiste (1) aus Metal, geeignet um in einem Rinnen- oder Abflußkörper zum Schutz der Ränder des Rinnen- oder Abflußkörpers und zum Stützen von Deckel oder Roste, die über Abflußrinnen oder Abflüße aufgestellt werden, verankert zu werden, mit einer flachen Tragfläche (3), um die Deckel oder Roste zu stützen, ferner mit einem Steg, der sich im wesentlichen vertikal ab der Tragfläche ausstreckt und einer Innenfläche (4) um die Deckel oder Roste seitwärts festzuhalten, versehen ist, **dadurch gekennzeichnet, daß** die Verankerung trapezförmige angegossene Vorsprünge (5) oder Rippen (9) aufweist, die auf der unteren Fläche (2a) eines ersten Flansches gebildet sind, wobei der Flansch sich ab dem Steg nach außen erstreckt und wobei der Randprofil (1) dabei einen z-förmigen Querschnitt bildet und wobei die Vorsprünge (5) oder Rippen (9) auch mit der äußeren Fläche (4a) des Steges verbunden sind, wobei die Vorsprünge (5) oder Rippen (9) mit schrägen Flächen (5a, 9a) versehen sind, die, bezüglich der Längsstreckung des Randprofils (1), in einem spitzen Winkel zu der unteren Fläche (2a) des ersten Flansches angebracht sind.

2. Randprofil oder Randleiste nach Anspruch 1, **gekennzeichnet durch** eine Anzahl trapezförmiger Verankerungsselemente (6), die auf der unteren Fläche (3a) des zweiten Flansches des z-förmigen Querschnitts gebildet sind, wobei die Verankerungselemente mit schrägen Flächen (6a) versehen sind, die in einem spitzen Winkel zur unteren Fläche angebracht sind.

3. Randprofil oder Randleiste nach Anspruch 1, **dadurch** **gekennzeichnet, daß** Aussparungen (5b) in den angegossenen Vorsprüngen (5) gebildet sind.

4. Randprofil oder Randleiste nach Anspruch 2, **dadurch** **gekennzeichnet, daß** Öffnungen (6b) in den Verankerungselementen (6) gebildet sind.

5. Randprofil oder Randleiste nach Anspruch 1, **gekennzeichnet durch** eine Anzahl Verankerungsschenkel (10), die sich ab der unteren Fläche (3a) des zweiten Flansches des Z-förmigen Querschnitts nach unten ausstrecken und einen im wesentlichen viereckigen, rechteckigen, oder trapezförmigen Querschnitt haben, wobei die Verankerungsschenkel nahe ihren Enden mit Vorsprüngen (10a) versehen sind.

6. Randprofil oder Randleiste nach Anspruch 5, **dadurch** **gekennzeichnet, daß** Verankerungsschenkel (10) eine Innenfläche (10b) aufweisen, die entweder eine Verlängerung der inneren Begrenzungsfläche (7) ist, die die Tragfläche (3) mit der unteren Fläche (3a) des zweiten Flansches des Z-förmigen Querschnitts verbindet, oder bezüglich dazu zurückweicht.

7. Randprofil oder Randleiste nach einem der vorangegangenen Ansprüchen, **gekennzeichnet durch** eine äußere Begrenzungsfläche (8), die die obere Fläche (2) mit der unteren Fläche (2a) des ersten Flansches des Z-förmigen Querschnitts verbindet, wobei die äußere Begrenzungsfläche (8) mit der oberen Fläche (2) des ersten Flansches einen Winkel von gerade unterhalb 90°, zum Beispiel ungefähr 80°, einschließt.

8. Randprofil oder Randleiste nach einem der vorangegangenen Ansprüche 2-7, **gekennzeichnet durch** eine innere Begrenzungsfläche (7) die die Tragfläche (3) mit der dazugehörigen unteren Fläche (3a) des zweiten Flansches des Z-förmigen Querschnitts verbindet, wobei die innere Begrenzungsfläche (7) mit der Tragfläche (3) einen Winkel von gerade unterhalb 90°, zum Beispiel ungefähr 80°, einschließt.

9. Randprofil oder Randleiste nach einem der vorangegangenen Ansprüche, **gekennzeichnet durch** eine äußere Begrenzungsfläche (8), die die obere Fläche (2) mit der unteren Flanschfläche (2a) des ersten Flansches des Z-förmigen Querschnitts verbindet, wobei der angegossene Vorsprung (5, 9) mit einer äußeren Begrenzungsfläche, die in einer zurückgelegenen Position oder in einer einwärts nach unten geneigten Position bezüglich der äußeren Begrenzungsfläche (8) des ersten Flansches (2, 2a) aufgestellt ist, versehen ist.

## Revendications

1. Elément ou châssis de bordage métallique (1) adapté pour être fixé dans un corps de gouttière ou de drain pour une protection des bords dudit corps de gouttière ou de drain et pour supporter des couvercles ou des grilles qui sont placés sur des gouttières ou des drains, comprenant une surface plane d'appui (3) pour supporter lesdits couvercles ou grilles, comprenant en outre une paroi s'étendant sensiblement verticalement à partir de ladite surface d'appui et comportant un plan intérieur (4) pour maintenir latéralement lesdits couvercle ou grilles, caractérisé en ce que la fixation comprend des saillies (5) ou des nervures (9) trapézoïdales formées au moulage sur le plan inférieur (2a) d'un premier rebord, ledit rebord s'étendant vers l'extérieur à partir de ladite paroi, ledit élément de bordage (1) ayant ainsi une section droite en forme de z, et lesdites saillies (5) ou nervures (9) sont reliées également au plan extérieur (4a) de ladite paroi, lesdites saillies (5) ou nervures (9) comportant des plans inclinés (5a, 9a) disposés avec un angle aigu par rapport à un plan de base (2a) du premier rebord par rapport à l'orientation longitudinale dudit élément de bordage (1).

2. Elément ou châssis de bordage selon la revendication 1, caractérisé en ce qu'il comprend un certain nombre de parties trapézoïdales de fixation (6) formées sur le plan inférieur (3a) du second rebord de ladite section en forme de Z, lesdites parties de fixation comportant des plans inclinés (6a) disposés avec un angle aigu par rapport au plan inférieur (3a).

3. Elément ou châssis de bordage selon la revendication 1, caractérisé en ce que des évidements (5b) sont formés dans les saillies (5) venues de moulage.

4. Elément ou châssis de bordage selon la revendication 2, caractérisé en ce que des ouvertures (6b) sont formées dans les parties de fixation (6).

5. Elément ou châssis de bordage selon la revendication 1, caractérisé par un certain nombre de branches d'ancrage (10) s'étendant vers le bas à partir du plan inférieur (3a) du second rebord de ladite section en forme de Z et ayant une section sensiblement quadrangulaire, rectangulaire ou trapézoïdale, lesdites branches d'ancrage comportant des saillies (10a) à proximité de leurs extrémités.

6. Elément ou châssis de bordage selon la revendication 5, caractérisé en ce que lesdites branches d'ancrage (10) comportent un plan intérieur (10b) qui constitue un prolongement du plan intérieur de délimitation (7) reliant la surface d'appui (3) avec le plan inférieur (3a) du second rebord de ladite section en forme de Z ou qui est placé en retrait par rapport à celui-ci.

7. Elément ou châssis de bordage selon l'une quelconque des revendications précédentes, caractérisé par un plan extérieur de délimitation (8) reliant le plan supérieur (2) avec le plan inférieur (2a) dudit premier rebord de ladite section en forme de Z, ledit plan extérieur de délimitation (8) faisant un angle juste inférieur à 90°, par exemple d'environ 80°, avec ledit plan supérieur (2) dudit premier rebord.

8. Elément ou châssis de bordage selon l'une quelconque des revendications précédentes 2 à 7, caractérisé par un plan intérieur de délimitation (8) reliant la surface d'appui (3) avec le plan inférieur correspondant (3a) du second rebord de ladite section en forme de Z, ledit plan intérieur de délimitation (7) faisant un angle juste inférieur à 90°, par exemple d'environ 80°, avec ladite surface d'appui (3).

9. Elément ou châssis de bordage selon l'une quelconque des revendications précédentes, caractérisé par un plan extérieur de délimitation (8), reliant le plan supérieur (2) avec le plan inférieur (2a) dudit premier rebord de la section en forme de Z, ladite saillie venue de moulage (5, 9), comportant un plan extérieur de délimitation placé dans une position de retrait ou dans une position inclinée vers l'intérieur ou vers le bas, par rapport audit plan extérieur de délimitation (8) dudit premier rebord (2, 2a)
